# EUROPÄISCHE PATENTSCHRIFT

(11) **EP 2 606 082 B1**
(45) Veröffentlichungstag und Bekanntmachung des Hinweises auf die Patenterteilung: **07.10.2015**
(21) Anmeldenummer: 11754996.4
(22) Anmeldetag: 19.08.2011
(51) Int. Cl.: E04F 15/02, E04F 15/04, C08G 65/336, C09J 171/02

(54) **WASSER-, LÖSEMITTEL- UND PHTHALAT-FREIER SILANMODIFIZIERTER EINKOMPONENTEN-PARKETTKLEBSTOFF UND DESSEN VERWENDUNG ZUR HOCHGRADIG MASSHALTIGEN VERKLEBUNG VON PARKETT, HOLZBODENBELÄGEN UND HOLZWERKSTOFFPLATTEN IM INNENAUSBAU**
WATER-, SOLVENT- AND PHTHALATE-FREE, SILANE-MODIFIED, ONE-COMPONENT PARQUET ADHESIVE AND USE THEREOF FOR HIGHLY DIMENSIONALLY STABLE BONDING OF PARQUET, WOOD FLOOR COVERINGS AND WOOD-BASED MATERIAL BOARDS IN INTERIOR FITMENT
COLLE À PARQUET À UN COMPOSANT, MODIFIÉE AU SILANE ET EXEMPTE D'EAU, DE SOLVANT ET DE PHTALATE, ET UTILISATION DE CELLE-CI POUR COLLER DE MANIÈRE EXTRÊMEMENT STABLE DU PARQUET, DES REVÊTEMENTS DE SOL EN BOIS ET DES PANNEAUX À BASE DE BOIS DANS LE CADRE D'UN AMÉNAGEMENT INTÉRIEUR

(30) Priorität: 20.08.2010 DE 102010034997
(43) Veröffentlichungstag der Anmeldung: 26.06.2013
(73) Patentinhaber: Stauf Klebstoffwerk GmbH, 57234 Wilnsdorf (DE)
(72) Erfinder: GAHLMANN, Frank, 57271 Hilchenbach (DE)
(74) Vertreter: Pfenning, Meinig & Partner GbR
(86) Internationale Anmeldenummer: PCT/EP2011/004197
(87) Internationale Veröffentlichungsnummer: WO 2012/022494

(56) Entgegenhaltungen:
- WO-A1-2007/085605
- WO-A1-2007/093381
- WO-A1-2009/058018
- WO-A1-2010/035820
- WO-A1-2010/063740
- WO-A2-2010/008154
- DE-A1-102006 006 973
- CADLE R ED - CADLE R: "Selection of Method of Particle Size Determination", 1. Januar 1955 (1955-01-01), PARTICLE SIZE DETERMINATION, INTERSCIENCE PUBLISHERS, US, PAGE(S) 92 - 101, XP007919094, Seite 93; Tabelle II Seite 98, Zeile 3 - Zeile 4 Seite 101, Zeile 4 - Zeile 6

## Beschreibung

Die vorliegende Erfindung betrifft einen silanmodifizierten, einkomponentigen Wasser-, Lösemittel- und Phthalat-freien Parkettklebstoff sowie dessen Verwendung zur hochgradig maßhaltigen Verklebung von Parkett, Holzbodenbelägen und Holzwerkstoffplatten mit Untergründen im Innenausbau.

Übliche Ein- und Zweikomponenten-Parkettklebstoffsysteme enthalten entweder Lösemittel, Wasser, gesundheitsgefährdende Substanzen wie z.B. Isocyanate oder sie erreichen die für eine hochgradig maßhaltige Parkettverklebung erforderlichen mechanischen Kennwerte, insbesondere hinsichtlich Zugscherfestigkeit und Elastizitätsmodul, nicht. Der erfindungsgemäße Parkettklebstoff überwindet diese Problematik durch seine spezielle, in Patentanspruch 1 beschriebene Zusammensetzung auf Basis mindestens eines silanterminierten feuchtigkeitsreaktiven Polyalkylenoxid-Oligomers mit mindestens drei mineralischen Komponenten sowie geeignetem Trockenmittel und Haftvermittler. Vorteilhafterweise ist zusätzlich mindestens ein Härtungskatalysator, UV-Lichtabsorber, Antioxidationsmittel, Weichmacher (Phthalat-frei), Flüssig-Extender und rheologisches Additiv enthalten. Die terminalen Silangruppen des mindestens einen Polyakylenoxid-Oligomers sind über Urethan- und/oder Harnstoffgruppen mit dem oligomeren Grundgerüst verbunden. Trockenmittel und Haftvermittler enthalten feuchtigkeitsreaktive Silangruppen, vorzugsweise Trimethoxysilangruppen. Die mindestens drei mineralischen Komponenten stehen untereinander und in Bezug zum verarbeitungsfertigen Produkt in definierten Mischungsverhältnissen und sind hinsichtlich Art, Oberflächenbeschaffenheit und Partikelgröße charakterisiert.

Die vorliegende Erfindung betrifft einen silanmodifizierten, einkomponentigen Wasser-, Lösemittel- und Phthalat-freien Parkettklebstoff sowie dessen Verwendung zur hochgradig maßhaltigen Verklebung von Parkett, Holzbodenbelägen und Holzwerkstoffplatten mit Untergründen im Innenausbau.

Bei der Verklebung von Holzbodenelementen, insbesondere Parkett, ist zu berücksichtigen, dass Holz ein "arbeitender" Werkstoff ist. Der Holzbodenbelag dehnt sich bei Feuchtigkeitsaufnahme aus und zieht sich bei Trocknung zusammen. Die Holzfeuchte kann sich z.B. durch Wasseraufnahme aus dem Untergrund während der Abtrocknung eines frischen Beton- oder Estrichuntergrundes oder durch die im jahreszeitlichen Verlauf variierenden Luftfeuchtigkeitswerte ändern. Zusätzlichen Einfluss haben Art und Intensität der Raumnutzung, wie z.B. Dauer und Intensität der Raumerwärmung, Klimatisierung oder Menge und Häufigkeit von Wasser- und/oder Schneeeinträgen über z.B. Kleidung oder Schuhe. Einen weiteren Einfluss auf das Holzmaß hat die Umgebungstemperatur, die im wesentlichen von den jahreszeitlichen Änderungen und der Raumbeheizung bzw. -klimatisierung abhängt.

Die unter diesen Einflüssen auftretenden Ausdehnungen und Schrumpfungen des Holzbodenbelags führen zu Scherkräften, denen der Parkettklebstoff und die Klebung standhalten muss und die der Parkettklebstoff in definiertem Maß durch Deformation reduzieren muss. Andernfalls bestünde die Gefahr von Aufwölbungen, Verwerfungen, Riss- und Fugenbildungen im Holz oder der Zerstörung des Untergrunds mit den daraus resultierenden Schadenbildern und Problemen bezüglich Sicherheit, Hygiene und Erscheinungsbild.

Zur Minimierung dieser bauphysikalischen Problematik wird in der für Parkettklebstoffe geltenden DIN EN-Norm 14293:2006-10 eine minimale Zugscherfestigkeit von 3,5 N/mm² (Lagerungsart A) gefordert.

Neben der Zugscherfestigkeit ist der Elastizitätsmodul ein bedeutender Indikator der Maßhaltigkeit der Parkettverklebung. Mit zunehmendem Elastizitätsmodul nimmt die Elastizität des gehärteten Klebstoffes ab. Dies hat höhere Rückstellkräfte der Klebstoffmatrix zur Folge und bewirkt, dass das Belagholz besser an der Klebestelle fixiert bleibt und eine geringere Gefahr von Aufwölbungen, Verwerfungen, Riss- und Fugenbildungen entsteht.

Zum Verkleben von Holzbelagelementen, insbesondere Parkett, werden üblicherweise Klebstoffe eingesetzt, die sich in folgende Klassen einteilen lassen: Dispersionsklebstoffe, Lösemittelklebstoffe, Pulverklebstoffe, Methylendiisocyanat-(MDI)basierte Zweikomponenten-Polyurethanklebstoffe, MDI-basierte Einkomponenten-Polyurethanklebstoffe, Toluendiisocyanat-(TDI)basierte Polyurethanklebstoffe und silanmodifizierte polymere Klebstoffe (SMP-Klebstoffe).

Seit den fünfziger Jahren werden Dispersionsklebstoffe auf Basis von Vinylacetat-Homopolymer-Dispersionen zur Parkettklebung eingesetzt. Sie binden durch Verdunstung des Wassers ab, wobei die Klebung ausschließlich auf physikalischen Wechselwirkungen der Moleküle (Dipol-Dipol, van der Waals-Wechselwirkungen) beruht. Nachteilig bei diesen bis heute eingesetzten Parkettklebstoffen ist der hohe Wassergehalt, der zu signifikanten Quellungen des Holzes und infolgedessen zu starken Maßänderungen des Parketts und anderer Holzbodenbeläge führen kann. Weiterhin unvorteilhaft ist die geringe Zeit, die zum Einlegen der Holzbodenbelagelemente nach dem Auftrag des Klebstoffes auf den Untergrund bleibt (offene Zeit). Die hohe Glasübergangstemperatur der Vinylacetat-Homopolymere macht zudem den Einsatz von Koaleszenzmitteln nötig, um eine Verfilmung der Dispersion bei der Verarbeitungstemperatur (Raumtemperatur) zu erreichen. Koaleszenzmittel sind flüchtige organische Verbindungen (VOCs), die auch nach der Parkettklebung noch über einen längeren Zeitraum an die Raumluft abgegeben werden und damit Umwelt- und Gesundheitsrisiken darstellen können.

Eine Weiterentwicklung der Dispersionsparkettklebstoffe auf Basis von Vinylacetat-Homopolymer-Dispersionen sind die Parkettklebstoffe auf Basis von Vinylacetat-Ethylen-Copolymer-Dispersionen. Bei diesen ähnlich formulierten Klebstoffen erfordert die niedrigere Glasübergangstemperatur der Copolymer-Dispersionen keine Koaleszenzmittel. Daneben werden heute auch spezielle Dispersionen auf Basis von Styrol-Acrylsäureester-Copolymeren eingesetzt. Diese Klebstoffe können aufgrund der niedrigen Glasübergangstemperatur der Dispersionen ebenfalls ohne Koaleszenzmittel formuliert werden. Nachteilig bleiben jedoch weiterhin die holzquellenden Eigenschaften und die geringen offen Zeiten von lediglich 10 bis 20 Minuten.

Ende der sechziger Jahre wurden Lösemittel-Kunstharz-Parkettklebstoffe eingeführt. Diese Klebstoffe basieren auf Lösungen von Vinylacetat-Homopolymeren in einem Lösemittelgemisch, das Methanol, Ethanol, Methylacetat, Ethylacetat und Aceton enthalten kann. Sie binden durch Verdunstung des Lösemittels sehr schnell ab. Vorteilhaft bei diesen bis heute eingesetzten Parkettklebstoffen sind die im Vergleich zu Dispersions-Parkettklebstoffen um ca. 50 bis 70% reduzierten holzquellenden Eigenschaften. Nachteilig ist jedoch der hohe Gehalt an Lösemitteln, deren Emission eine Belastung des Verarbeiters und der Umwelt bedeutet und demzufolge die Verwendung in Innenräumen limitiert ist. Die Produkte sind in der Regel als leichtentzündlich und gesundheitsschädlich oder reizend gekennzeichnet. Zudem sind die offenen Zeiten dieser Parkettklebstoffklasse besonders kurz (5 bis 10 Minuten) und somit nachteilig für den Verarbeitungsprozess.

Eine bezüglich der Lösemittelemissionen vorteilhafte Weiterentwicklung dieser Parkettklebstoffe ist in einem Patent der Stauf Klebstoffwerk GmbH (US 7,420,009 B2: LOW EMISSION ADHESIVE COMPOSITION BASED ON A SOLVENT) offenbart.

Eine andere Weiterentwicklung der Dispersionsparkettklebstoffe sind pulverförmige Klebstoffformulierungen. Diese basieren auf reemulgierbaren Dispersionspulvern - in der Regel Vinylacetat-Ethylen-Copolymere. Sie enthalten eine mineralische Komponente, die Calciumsulfat-Hemihydrat, Portlandzement oder Aluminatzement enthalten kann. Bei diesen Klebstoffen handelt es sich um 2-Komponenten-Systeme, die aus Pulver und einer weiteren Komponente bestehen. Die zweite Komponente, die mit der Pulverkomponente gemischt wird, ist Wasser oder eine Polymerdispersion. Der Vorteil dieser Parkettklebstoffklasse ist die chemische Wasserbindung der mineralischen Komponente. Die unvorteilhafte Holzquellung der Dispersionsklebstoffe verringert sich dadurch auf ungefähr das Niveau der Lösemittel-Kunstharz-Parkettklebstoffe. Nachteilig ist die begrenzte Topfzeit zwischen dem Mischen der Komponenten und dem Verarbeitungsende, in der die chemische Reaktion abläuft, die zunehmend eine Viskositätserhöhung bewirkt. Die Einlegezeit (offene Zeit) zwischen dem Klebstoffauftrag und dem Einlegen des Holzbodenelements ist genauso kurz wie bei den Dispersionsparkettklebstoffen. Zudem nachteilig sind die grundsätzlich allen zweikomponentigen Systemen innewohnenden Schwierigkeiten, die im zusätzlichen Mischaufwand, in der Gefahr eines nicht homogenen Mischens und in einer inadäquaten Einstellung des Mischungsverhältnisses durch den Anwender liegen.

In den neunziger Jahren wurden Reaktionsklebstoffe auf Polyurethanbasis zur Klebung von Parkett eingeführt. Zunächst waren es Zweikomponenten-Systeme, die aus einer Harzkomponente und einem Isocyanat-Härter bestehen. Das Bindemittel in der Harzkomponente ist ein hydroxy-funktionelles Polyol; die formulierte Harzkomponente enthält zusätzlich Wasserfänger, mineralische Füllstoffe, Katalysatoren und Additive. Die Isocyanat-Härter-Komponente besteht in der Regel aus technischem, oligomerem Methylendiphenyldiisocyanat (MDI, oft auch als Polymer-MDI bezeichnet). Vorteilhaft bei diesen Klebstoffen ist die im Vergleich zu Pulver-Parkettklebstoffen nochmals reduzierte und somit für die Praxis nicht mehr relevante holzquellende Wirkung sowie die längeren offenen Zeiten von ca. 30 bis 60 Minuten. Die sehr hohe Festigkeit der Verklebung mit Elastizitätsmodulen in der Größenordnung von 40 bis 100 N/mm² und Zugscherfestigkeiten von 5 bis 9 N/mm² steht für ausgezeichnete Maßhaltigkeit, die jedoch mit dem Nachteil einer vergleichsweise hohen Beanspruchung des Untergrundes erkauft wird. Die auftretenden Scherkräfte können, insbesondere bei mit Schwachstellen behafteten Untergründen, zu Brüchen und Rissbildungen führen. Nachteilig ist weiterhin die auf dem Isocyanatgehalt beruhende Gefährdung für Gesundheit und Umwelt, die sich u.a. in der Gefahrstoffkennzeichnung nach dem internationalen GHS-System oder der deutschen Gefahrstoffverordnung ausdrückt. Danach werden diese Klebstoffe als gesundheitsschädlich, reizend und sensibilisierend einstuft. Weiterhin nachteilig sind die grundsätzlich allen zweikomponentigen Systemen eigenen Probleme, wie sie bereits bei den Pulverklebstoffen beschrieben wurden.

Kurz nach den Zweikomponenten-Polyurethanklebstoffen wurden reaktive einkomponentige Polyurethan-Parkettklebstoffe entwickelt. Basis dieser Klebstoffe sind Isocyanat-Gruppen-haltige feuchtigkeitsreaktive Prepolymere bzw. Oligomere auf Basis von Methylendiphenyldiisocyanat (MDI), die oft noch oligomeres und monomeres MDI enthalten. Weitere Bestandteile dieser Klebstoffe sind mineralische Füllstoffe, Katalysatoren und Additive. Im Vergleich zu den Zweikomponenten-Polyurethanklebstoffen vorteilhaft sind die nochmals verlängerten offenen Zeiten (45 bis 120 Minuten), die zusammen mit der Einkomponentigkeit die Handhabung und Verarbeitung des Klebstoffes erleichtern. Die holzquellende Wirkung entspricht der der Zweikomponenten-Polyurethanklebstoffe und ist dementsprechend unproblematisch. Weiterhin vorteilhaft sind die mechanischen Eigenschaften. Die erreichten Festigkeiten der Verklebung bewirken einerseits eine hohe Maßhaltigkeit, andererseits eine Untergrundbeanspruchung, die geringer ist als die der Zweikomponenten-Polyurethansysteme. Nachteilig an den Einkomponenten-Polyurethanklebstoffen ist jedoch weiterhin die Gefährdung für Gesundheit und Umwelt, die der der Zweikomponenten-Polyurethan-Parkettklebstoffe entspricht und auf einem Restgehalt an monomerem und oligomerem MDI in den Prepolymeren bzw. Oligomeren beruht.

Ende der neunziger Jahre wurden einkomponentige Reaktionsklebstoffe auf Basis von Toluendiisocyanat-Oligomeren (TDI-Klebstoffe) zur Klebung von Holzbodenbelägen eingeführt. Der Vorteil dieser Klebstoffe im Vergleich zu den etablierten MDI-basierten Polyurethanklebstoffen ist, dass sie nicht als gesundheitsschädlich, reizend oder sensibilisierend eingestuft werden und nach dem aktuellen internationalen GHS-Kennzeichnungssystem und der deutschen Gefahrstoffverordnung nicht kennzeichnungspflichtig sind. Diese Eigenschaft ist auf ihren äußerst geringen Restgehalt an monomerem TDI zurückzuführen. Hinsichtlich offener Zeit und holzquellender Eigenschaften gleichen sie den MDI-basierten Polyurethanklebstoffen. Nachteilig im Vergleich zu diesen ist jedoch die deutlich höhere Elastizität und geringere Festigkeit und Maßhaltigkeit der erzeugten Verklebung. Die bei MDI-basierten Polyurethan-, Dispersions-, Pulver- und Lösemittelklebstoffen üblichen Elastizitätsmoduln werden im Bereich einer Größenordnung unterschritten. Damit eignen sich TDI-basierte Polyurethanklebstoffe vor allem für die Parkettklebung auf labile Untergründe, die eine nur geringe Beanspruchung durch Scher- und Haftzugkräfte vertragen.

Die neueste Entwicklung sind Parkettklebstoffe auf Basis silanmodifizierter oligomerer Verbindungen, sogenannte SMP-Klebstoffe (mitunter auch als Hybridklebstoffe bezeichnet). Diese Klebstoffe sind gekennzeichnet durch oligomere organische Verbindungen (häufig auch als Prepolymere bezeichnet), die feuchtigkeitsreaktive Silangruppen, meist Dimethoxymethylsilan- oder Trimethoxysilangruppen, tragen. Nach Kontakt mit Feuchtigkeit aus dem Untergrund, dem Belagholz oder der Luft vernetzen die feuchtigkeitsreaktiven Silangruppen durch Hydrolyse und anschließende Kondensation zu einem dreidimensionalen Siloxan-Netzwerk, der Klebstoffmatrix.

Weitere Bestandteile dieser Klebstoffe sind typischerweise flüssige Extender, Weichmacher, mineralische Füllstoffe, Wasserfänger, Haftvermittler, Katalysatoren und weitere Additive.

Für die Verklebung von Parkett weisen silanmodifizierte Klebstoffe in der Regel folgende Vorteile auf:
- Einkomponentigkeit
- frei von Wasser und Lösemitteln
- ausreichend lange offene Zeiten
- keine praxisrelevante holzquellende Wirkung
- keine Einstufung als umwelt- oder gesundheitsgefährdend und somit kennzeichnungsfrei nach der deutschen Gefahrstoffverordnung und dem internationalem GHS-Kennzeichnungssystem

Weiterhin vorteilhaft ist die pseudoplastische Rheologie von SMP-Parkettklebstoffen. In der Praxis bedeutet dies, dass die Klebstoffe nicht verlaufen und sich gut mit einem Zahnspachtel auftragen lassen. Gezogene Klebstoffraupen bleiben formstabil und bieten damit eine wichtige Voraussetzung, kleinere Hohlräume zwischen Holzbodenbelag und Untergrund überbrücken zu können.

Nachteilig an den SMP-Parkettklebstoffen ist - ähnlich den kennzeichnungsfreien TDI-basierten Polyurethanklebstoffen - die hohe Elastizität und geringe Festigkeit der nach dem Aushärten gebildeten Polymermatrix. Die mechanischen Eigenschaften sind zwar besser als die der kennzeichnungsfreien TDI-basierten Polyurethanklebstoffe. Für eine hochgradig maßhaltige Verklebung sind sie dennoch unzureichend. Typischerweise liegen die Zugscherfestigkeiten im Bereich von 1,0 bis 2,0 N/mm² und die Elastizitätsmoduln im Bereich 1,0 bis 3,0 N/mm². Sie befinden sich damit deutlich unterhalb der Werte, die von konventionellen Parkettklebstoffen aus der Gruppe der Polyurethan-, Dispersions-, Pulver- und Lösemittelklebstoffe erreicht werden. Während zuletzt genannte die Anforderungen der DIN EN 14293 bezüglich Mindestzugscherfestigkeit typischerweise einhalten, ist dies bei SMP-Parkettklebstoffen nicht der Fall. Nach aktuellem Stand der Technik wird eine Zugscherfestigkeit von 4,0 N/mm² (Prüfbedingungen DIN EN 14293:2006-10, Lagerungsart A) und einen Elastizitätsmodul von 7,5 N/mm² (Prüfbedingungen DIN EN ISO 527-1:1996-04 und DIN EN ISO 527-3:2003-07) von keinem silanmodifizierten Parkettklebstoff erreicht - ein Umstand, der einer größeren Akzeptanz und Verwendung dieser Parkettklebstoffe bisher entgegen steht.

Ausgehend von diesem Stand der Technik, ist es Aufgabe der vorliegenden Erfindung, einen Parkettklebstoff zur Verfügung zu stellen, der alle oder mehrere der folgenden Vorteile aufweist: Er soll einfach anzuwenden sein, eine ausreichend lange offene Zeit gewährleisten, keine relevante holzquellende Wirkung besitzen, Gesundheit und Umwelt nicht gefährden, frei von Wasser, Lösemitteln und Phthalaten sein, gute Haftungseigenschaften auf im Innenausbau üblichen Untergründen besitzen, eine hohe Festigkeit der Verklebung erzeugen und eine hohe Maßhaltigkeit des verklebten Holzbelages gewährleisten. Vorteilhafterweise soll der zur Verfügung gestellte Parkettklebstoff eine Zugscherfestigkeit von mindestens 4,0 N/mm² (Prüfbedingungen DIN EN 14293:2006-10, Lagerungsart A) und einen Elastizitätsmodul von mindestens 7,5 N/mm² (Prüfbedingungen DIN EN ISO 527-1:1996-04 und DIN EN ISO 527-3:2003-07) erzeugen. Eine weitere Aufgabe der Erfindung ist es, die Verwendung des erfindungsgemäßen Parkettklebstoffes zur Verklebung von Parkett, Holzbodenbelägen und Holzwerkstoffplatten mit im Innenausbau üblichen Untergründen unter den für den Parkettklebstoff angegebenen Zielsetzungen zur Verfügung zu stellen.

Diese Aufgabe wird gelöst durch den einkomponentigen, silanmodifizierten, Wasser- Lösemittel- und Phthalat-freien Parkettklebstoff nach Anspruch 1, sowie dessen Verwendung nach Anspruch 10. Vorteilhafte Weiterbildungen des erfindungsgemäßen Parkettklebstoffes und der erfindungsgemäßen Verwendung werden in den jeweiligen abhängigen Ansprüchen gegeben.

Der erfindungsgemäße Parkettklebstoff ist ein silanmodifizierter Parkettklebstoff mit deutlich verbesserten mechanischen Eigenschaften. Er besitzt die verarbeitungs- und anwendungstechnischen Vorteile der dem Stand der Technik entsprechenden SMP-Parkettklebstoffe, ohne deren nachteilig geringe Festigkeiten und die damit verbundenen Maßhaltigkeitsprobleme aufzuweisen. Die vorteilhaften mechanischen Eigenschaften des erfindungsgemäßen Parkettklebstoffes, insbesondere bezüglich Zugscherfestigkeit und Elastizitätsmodul, sind im wesentlichen zurückzuführen auf die Auswahl eines geeigneten Basispolymers in Kombination mit einer speziell zusammengesetzten Komposition aus mindestens drei mineralischen Komponenten definierter Art, Oberflächenbeschaffenheit und Partikelgröße. Daneben ist auch die Auswahl eines geeigneten Trockenmittels und Haftvermittlers für die vorteilhaften Klebstoffeigenschaften verantwortlich.

Erfindungsgemäß enthält der einkomponentige, silanmodifizierte, Wasser- Lösemittel- und Phthalat-freie Parkettklebstoff, der zur hochgradig maßhaltigen Verklebung von Parkett, Holzbodenbelägen und Holzwerkstoffplatten mit im Innenausbau üblichen Untergründen geeignet ist, folgende Stoffe oder er besteht aus ihnen:
a) 10 bis 30 Massenprozent eines feuchtigkeitsreaktiven silanterminierten Polyalkylenoxid-Bindemittels mit einem mittleren Molekulargewicht von 6.000 bis 20.000 g/mol,
   wobei die Silanfunktionen über Urethan- und/oder Harnstoffgruppen mit dem oligomeren Grundgerüst verbunden sind,
b) 30 bis 60 Massenprozent eines oberflächenhydrophobierten Kreidepulvers mit einem mittleren Partikeldurchmesser von 0,8 bis 4,0 um,
c) 2 bis 10 Massenprozent eines oberflächenhydrophobierten Kreidepulvers mit einem mittleren Partikeldurchmesser von 0,2 bis 0,7 µm,
d) 3 bis 15 Massenprozent eines oberflächenhydrophobierten Wollastonits mit einer mittleren Nadellänge von 15 bis 60 µm und einem mittleren Aspektverhältnis von 3:1 bis 12:1,
e) 0,2 bis 3 Massenprozent eines feuchtigkeitsreaktiven silanmodifizierten Trockenmittels,
f) 0,3 bis 4 Massenprozent eines feuchtigkeitsreaktiven silanmodifizierten Haftvermittlers,
   wobei sich die Prozentangaben auf die Masse des verarbeitungsfertigen Parkettklebstoffes beziehen und die Summe der Bestandteile a) bis f) 45,5 % bis 100 % beträgt.

Insbesondere kann der Parkettklebstoff folgende Anteile an Bestandteilen aufweisen:
a) 16 bis 26 Massenprozent eines feuchtigkeitsreaktiven silanterminierten Polyalkylenoxid-Bindemittels mit einem mittleren Molekulargewicht von 7.000 bis 13.000 g/mol,
   wobei die terminalen Silanfunktionen über Urethan- und/oder Harnstoffgruppen mit dem oligomeren Grundgerüst verbunden sind,
b) 44 bis 54 Massenprozent eines oberflächenhydrophobierten Kreidepulvers mit einem mittleren Partikeldurchmesser von 0,8 bis 1,8 µm,
c) 3 bis 6 Massenprozent eines oberflächenhydrophobierten Kreidepulvers mit einem mittleren Partikeldurchmesser von 0,3 bis 0,6 µm,
d) 5 bis 10 Massenprozent eines oberflächenhydrophobierten Wollastonits mit einer mittleren Nadellänge von 25 bis 45 µm und einem mittleren Aspektverhältnis von 5:1 bis 10:1,
e) 0,5 bis 1,5 Massenprozent eines feuchtigkeitsreaktiven silanmodifizierten Trockenmittels,
f) 1 bis 3 Massenprozent eines feuchtigkeitsreaktiven silanmodifizierten Haftvermittlers,
   wobei sich die Prozentangaben auf die Masse des verarbeitungsfertigen Parkettklebstoffes beziehen und die Summe der Bestandteile a) bis f) 69,5 % bis 100 % beträgt.

Gemäß einer bevorzugten Ausführungsform beträgt das Massenverhältnis von Bestandteil b) zu Bestandteil c) 6:1 bis 16:1 und das Massenverhältnis von Bestandteil c) zu Bestandteil d) 1:1 bis 1:2. Insbesondere ist vorteilhaft, wenn das Massenverhältnis von Bestandteil b) zu Bestandteil c) 9:1 bis 15:1 und das Massenverhältnis von Bestandteil c) zu Bestandteil d) 1:1,5 bis 1:2 beträgt.

Als Basispolymer und Bindemittel enthält der erfindungsgemäße Parkettklebstoff 10 bis 30 Massenprozent, vorzugsweise 16 bis 26 Massenprozent, ganz besonders bevorzugt 21,5 Massenprozent eines feuchtigkeitsreaktiven silanterminierten Polyalkylenoxids, dessen Silanfunktionen über Urethan- und/oder Harnstoffgruppen mit dem oligomeren Grundgerüst verbunden sind. Vorzugsweise ist das oligomere Grundgerüst ein Polypropylenoxid und die Silanfunktionen sind Trimethoxysilangruppen. Das mittlere Molekulargewicht des Oligomers liegt zwischen 6.000 und 20.000 g/mol, vorzugsweise zwischen 7.000 und 13.000 g/mol, ganz besonders bevorzugt bei 10.000 g/mol.

Mindestens zwei mineralische Komponenten sind Kreidepulver mit einer mittleren Partikelgröße jeweils von 0,8 bis 4,0 µm, vorzugsweise 0,8 bis 1,8 µm, ganz besonders bevorzugt 1,0 µm und von 0,2 bis 0,7 µm, vorzugsweise 0,3 bis 0,6 µm, ganz besonders bevorzugt 0,4 µm.

Das Kreidepulver mit der größeren Partikelgröße ist zu 30 bis 60 Massenprozent, vorzugsweise 44 bis 54 Massenprozent, ganz besonders bevorzugt 49,1 Massenprozent im erfindungsgemäßen Parkettklebstoff enthalten, während das mit der kleineren Partikelgröße zu 2 bis 10 Massenprozent, vorzugsweise 3 bis 6 Massenprozent, ganz besonders bevorzugt 4 Massenprozent enthalten ist.

Eine Substitution der Kreiden durch gefällte Calciumcarbonatpulver ist nicht möglich, da diese kleinere als die erfindungsgemäß geforderten Partikelgrößen besitzen. Ebenso führt die Substitution der Kreiden durch anderes Calciumcarbonatgestein, wie Kalkstein, nicht zu den erfindungsgemäßen Vorteilen. Die Oberflächen der Kreidepartikel sind hydrophobiert.

Mindestens eine weitere mineralische Komponente ist das faserartig strukturierte Silicat Wollastonit, das mit 3 bis 15 Massenprozent, vorzugsweise 5 bis 10 Massenprozent, ganz besonders bevorzugt 7 Massenprozent enthalten ist und eine mittlere Nadellänge von 15 bis 60 µm, vorzugsweise 25 bis 45 µm, ganz besonders bevorzugt 39 µm und ein mittleres Aspektverhältnis von 3:1 bis 12:1, vorzugsweise 5:1 bis 10:1, ganz besonders bevorzugt 7:1 aufweist. Die Oberflächen des Wollastonits sind hydrophobiert.

Die Hydrophobierung der Kreide- und Silicatpartikel erfolgt entweder durch Behandlung mit einer oder mehrerer Fettsäuren und/oder ihrem Salz/ihren Salzen, vorzugsweise durch Behandlung mit Stearinsäure und/oder Stearat oder über eine Silanisierung, vorzugsweise durch Umsetzung mit einem reaktiven Silan, ganz besonders bevorzugt durch Umsetzung mit Aminosilan.

Als Wasserfänger enthält der erfindungsgemäße Parkettklebstoff 0,2 bis 3 Massenprozent, vorzugsweise 0,5 bis 1,5 Massenprozent, ganz besonders bevorzugt 0,8 Massenprozent eines feuchtigkeitsreaktiven silanmodifizierten Trockenmittels. Trimethoxysilan-terminierte Alkene werden bevorzugt eingesetzt, ganz besonders bevorzugt ist Vinyltrimethoxysilan.

Zur Verbesserung der Haftungseigenschaften enthält der erfindungsgemäße Parkettklebstoff 0,3 bis 4 Massenprozent, vorzugsweise 1 bis 3 Massenprozent, ganz besonders bevorzugt 1,9 Massenprozent eines feuchtigkeitsreaktiven silanmodifizierten Haftvermittlers. Trimethoxysilan-terminierte Aminoalkylverbindungen werden bevorzugt eingesetzt, ganz besonders bevorzugt ist 3-Aminopropyltrimethoxysilan.

Zur Beschleunigung des Aushärtungsvorganges kann der erfindungsgemäße Parkettklebstoff vorteilhafterweise bis zu 0,1 Massenprozent, vorzugsweise 0,005 bis 0,05 Massenprozent, ganz besonders bevorzugt 0,025 Massenprozent eines Härtungskatalysators enthalten. Organo-Übergangsmetall-Verbindungen sind bevorzugte Härtungskatalysatoren, ganz besonders bevorzugt ist Dibutylzinndiacetylacetonat.

Zur Verbesserung der Haltbarkeit kann der erfindungsgemäße Parkettklebstoff vorteilhafterweise zusätzlich Antioxidationsmittel und/oder UV-Licht-Absorber (Fotostabilisatoren) von zusammen bis zu 3 Massenprozent, vorzugsweise 0,1 bis 1 Massenprozent, ganz besonders bevorzugt 0,2 Massenprozent enthalten.

Als Antioxidationsmittel werden bevorzugt sterisch gehinderte Phenole eingesetzt, vorzugsweise 3,5-Bis(1,1-dimethylethyl)-4-hydroxy-benzylpropansäure-C7-C9-isoalkylester.

Als UV-Licht-Absorber werden bevorzugt sterisch gehinderte Amine verwendet, vorzugsweise Bis(1,2,2,6,6-pentamethyl-4-piperidyl)sebacat oder Methyl-1,2,2,6,6-pentamethyl-4-piperidylsebacat; ganz besonders bevorzugt ist eine Mischung dieser Sebacate.

Zur Einstellung einer verarbeitungsfreundlichen Viskosität kann der erfindungsgemäße Parkettklebstoff vorteilhafterweise Weichmacher und/oder Flüssig-Extender von zusammen bis zu 20 Massenprozent, vorzugsweise 7 bis 15 Massenprozent, ganz besonders bevorzugt 10,8 Massenprozent enthalten.

Als Weichmacher können aromatische Alkylsulfonsäureester, aliphatische cyclische Carbonsäureester oder aliphatische cyclische Dicarbonsäureester, vorzugsweise 1,2-Cyclohexandicarbonsäurediisononylester eingesetzt werden.

Als Flüssig-Extender können Polyetherpolyole, vorzugsweise Polypropylenoxid mit einem Molekulargewicht von 300 bis 3.000 g/mol, vorzugsweise mit 700 bis 1.300 g/mol; ganz besonders bevorzugt mit 1.000 g/mol eingesetzt werden.

Auf den Einsatz der ansonsten häufig verwendeten Phthalate wird aufgrund der vermuteten fortpflanzungsgefährdenden Wirkung vollständig verzichtet. Die erfindungsgemäße Zusammensetzung des Parkettklebstoffes bewirkt, dass sich dies nicht nachteilig auswirkt, sondern die vorteilhaften Eigenschaften silanmodifizierter Parkettklebstoffe bestehen bleiben. Zusätzlich sind die mechanischen Eigenschaften deutlich verbessert und eine hohe Maßhaltigkeit der Parkettverklebung wird gewährleistet.

Als zusätzliches Bindemittel und Reaktivverdünner kann der erfindungsgemäße Parkettklebstoff bis zu 10 Massenprozent, vorzugsweise 2 bis 6 Massenprozent, ganz besonders bevorzugt 4 Massenprozent eines feuchtigkeitsreaktiven silanterminierten Polyalkylenoxids enthalten, dessen Silanfunktionen über Alkylgruppen mit dem oligomeren Grundgerüst verbunden sind. Vorzugsweise ist das oligomere Grundgerüst ein Polypropylenoxid und die Silanfunktionen sind Dimethoxymethylsilangruppen. Das mittlere Molekulargewicht des Oligomers liegt zwischen 300 und 3.000 g/mol, vorzugsweise zwischen 700 und 1.300 g/mol, ganz besonders bevorzugt bei 1.000 g/mol.

Als rheologisches Additiv kann der erfindungsgemäße Parkettklebstoff zusätzlich bis zu 3 Massenprozent, vorzugsweise 0,3 bis 1,3 Massenprozent, ganz besonders bevorzugt 0,675 Massenprozent eines Wachses, vorzugsweise eines Polyamidwachses enthalten.

Die einzelnen Bestandteile der erfindungsgemäßen Klebstoffzusammensetzung können jeweils als Reinstoffe enthalten sein oder, sofern die für den jeweiligen Bestandteil geltenden Kriterien wie Gesamtanteil, Massenverhältnis, Molekulargewicht, Struktur, Chemie, Partikelgröße, Nadellänge, Aspektverhältnis und/oder Oberflächenbeschaffenheit erfüllt bleiben, als Gemisch ähnlicher Stoffe.

Zur Verbesserung bzw. Einstellung von Erscheinungsbild, Rheologie und/oder Stabilität kann der erfindungsgemäße Parkettklebstoff weitere Additive wie Pigmente, Farbstoffe, organische/anorganische Füllstoffe, Harze, Wachse oder Konservierungsmittel enthalten.

Der erfindungsgemäße Parkettklebstoff besitzt eine Reihe verarbeitungs- und anwendungstechnischer Vorteile, die in dieser Kombination kein anderer Parkettklebstoff auf sich vereint:
- Einkomponentigkeit
- frei von Wasser, Lösemitteln und Phthalaten
- ausreichend lange offene Zeit
- keine praxisrelevante holzquellende Wirkung
- keine Einstufung als umwelt- oder gesundheitsgefährdend und kennzeichnungsfrei nach aktuellem GHS-Kennzeichnungssystem und deutscher Gefahrstoffverordnung
- hohe Festigkeit der Verklebung, abzulesen insbesondere an der Zugscherfestigkeit
- hohe Maßhaltigkeit des verklebten Belagholzes, abzulesen insbesondere am Elastizitätsmodul
- ausgeprägte pseudoplastische Rheologie mit geeigneter Verarbeitungsviskosität
- leichte Auftragbarkeit mittels Zahnspachtel und strukturbeständige Klebstoffraupen
- gute Haftungseigenschaften auf feuchten und trockenen im Innenausbau üblichen Untergründen
- einfache und sichere Handhabung und Verarbeitung

Der erfindungsgemäße Parkettklebstoff ist einkomponentig und frei von Wasser, Lösemitteln und Phthalaten.

Die offene Zeit liegt im Bereich von 50 bis 70 Minuten (DIN EN 14293:2006-10), wodurch eine vergleichsweise lange Verarbeitungszeit gewährleistet ist.

Aufgrund seiner Wasser- und Lösemittelfreiheit besteht keine praxisrelevante holzquellende Wirkung des Klebstoffes.

Die Lösemittelfreiheit und der vollständige Verzicht auf den Zusatz von Phthalaten, Isocyanaten und anderen potentiell gesundheitsgefährdenden Substanzen bedingt die Gesundheits- und Umweltverträglichkeit des erfindungsgemäßen Parkettklebstoffes. Dies ist daran abzulesen, dass der Klebstoff gemäß der aktuellen deutschen Gefahrstoffverordnung und dem internationalen GHS-Gefahrstoffkennzeichnungssystem nicht kennzeichnungspflichtig ist.

Der erfindungsgemäße Parkettklebstoff besitzt eine Zugscherfestigkeit von ≥ 4,0 N/mm² (DIN EN 14293:2006-10, Lagerungsart A) und einen Elastizitätsmodul von ≥ 7,5 N/mm² (DIN EN ISO 527-1:1996-04 und DIN EN ISO 527-3:2003-07). Festigkeitswerte in dieser Größenordnung sind mit silanmodifizierten Parkettklebstoffen bisher unerreicht. Sie garantieren auch bei mechanischer und/oder klimatischer Beanspruchung eine hohe Maßhaltigkeit des verklebten Holzbodenbelags. Der Untergrund wird darüberhinaus mechanisch nicht so stark belastet, wie das bei Zweikomponenten-Polyurethanklebstoffen der Fall ist.

Die ausgeprägte pseudoplastische Rheologie und eine Viskosität zwischen 80.000 und 140.000 mPa·s (Prüfbedingungen gemäß DIN EN ISO 2555:2000-01, 20 Umdrehungen pro Minute) garantieren zusammen mit der Einkomponentigkeit eine einfache Handhabung und Verarbeitung des erfindungsgemäßen Klebstoffes. Der Klebstoff lässt sich leicht mit einem Zahnspachtel auftragen und lässt formstabile Klebstoffraupen bis zu einer Höhe von 10 mm und mehr zu.

Der erfindungsgemäße Parkettklebstoff besitzt ausgezeichnete Haftungseigenschaften auf im Innenausbau üblichen Untergründen, wie Beton, Zement, Zementestrich, Zementfließestrich, Zementmörtel, zementgebundene Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, mineralischer Spachtelmasse, textilem faserartigen Material oder einer Kombination dieser Untergründe. Die Haftung ist auch auf bis zu 8 Massenprozent Wasser enthaltenden Untergründen, wie z.B. feuchtem Beton oder Zementestrich, nicht beeinträchtigt.

Handelsübliches Parkett, Holzbodenbeläge und/oder Holzwerkstoffplatten, die ganz oder teilweise aus europäischen Laub- und/oder Nadelholzarten, nichteuropäischen Holzarten oder einer Kombination dieser Holzarten bestehen, werden sicher und hochgradig maßhaltig mit dem Untergrund verklebt.

Die vorteilhaften Eigenschaften des erfindungsgemäßen Parkettklebstoffes garantieren eine ebenso einfache wie sichere Handhabung und Verarbeitung des Klebstoffes.

In Tabelle 1 wird ein Ausführungsbeispiel des erfindungsgemäßen Parkettklebstoffes mit einer besonders bevorzugten Zusammensetzung gegeben.

In Tabelle 5 und 6 sind die Zusammensetzungen der handelsüblichen Parkettklebstoffe SMP-920 und SMP-930 (Stauf Klebstoffwerk GmbH) zusammen gefasst. Sie dienen in nachfolgenden Untersuchungen als Referenz zum erfindungsgemäßen Klebstoff.

In ihrer Zusammensetzung unterscheiden sich die beiden handelsüblichen Parkettklebstoffe von dem erfindungsgemäßen Parkettklebstoff im wesentlichen durch eine abweichende Komposition aus Basispolymer und mineralischen Komponenten sowie ihrem Phthalatanteil. Beispielsweise ist das oberflächenhydrophobierte faserartig strukturierte Silicat Wollastonit - unverzichtbarer mineralischer Bestandteil des erfindungsgemäßen Klebstoffes - in den handelsüblichen Klebstoffen nicht enthalten. Anders herum enthalten beide handelsüblichen Klebstoffe Kalksteinpulver und teilweise auch gefällte Calciumcarbonate und Kieselsäure, die im erfindungsgemäßen Parkettklebstoff nicht vorkommen. Auch unterscheiden sich die mittleren Partikeldurchmesser und deren Verteilungsprofile zwischen erfindungsgemäßem Klebstoff und den handelsüblichen Formulierungen. So sind z.B. Partikelgrößen pulverartiger mineralischer Komponenten von > 4 µm im erfindungsgemäßen Parkettklebstoff nicht enthalten. Ein weiterer Unterschied liegt im Phthalatgehalt, welcher bei SMP-930 11 Massenprozent (Bis(2-propylheptylphthalat) und bei SMP-920 20 Massenprozent (Diisononylphthalat) der verarbeitungsfertigen Klebstoffmischung beträgt. Im erfindungsgemäßen Parkettklebstoff ist dagegen kein Phthalat enthalten. Vor dem Hintergrund einer fortpflanzungsschädlichen Wirkung der Phthalate ist SMP-930 im Vergleich zu SMP-920 als höherwertiger zu betrachten.

Die Zugscherfestigkeit des erfindungsgemäßen Parkettklebstoffes (Zusammensetzung gemäß Tabelle 1) wurde gemäß DIN EN 14293:2006-10 (Lagerungsart A) bestimmt und mit der handelsüblicher silanmodifizierter Parkettklebstoffe (SMP-920 und SMP-930, Stauf Klebstoffwerk GmbH) verglichen.

Im Vergleich zu den handelsüblichen silanmodifizierten Parkettklebstoffen SMP-920 und SMP-930 (Stauf Klebstoffwerk GmbH) ergaben sich die in Tabelle 2 zusammengefassten Zugscherfestigkeiten.

Die Ergebnisse zeigen, dass der erfindungsgemäße Parkettklebstoff im Vergleich zu SMP-930 eine um 124 % höhere Zugscherfestigkeit und im Vergleich zu SMP-920 sogar eine um 146 % höhere Zugscherfestigkeit besitzt. Die gemäß DIN EN 14293:2006-10 geforderte Mindestzugscherfestigkeit von 3,5 N/mm² sowie die erfindungsgemäß beanspruchte Zugscherfestigkeit von mindestens 4,0 N/mm² (Lagerungsart A) wird erreicht bzw. deutlich überschritten.

Der Elastizitätsmodul des erfindungsgemäßen Parkettklebstoffes (Zusammensetzung gemäß Tabelle 1) wurde gemäß DIN EN ISO 527-1:1996-04 und DIN EN ISO 527-3:2003-07 bestimmt. Im Vergleich zu den handelsüblichen silanmodifizierten Parkettklebstoffen SMP-920 und SMP-930 ergaben sich dabei die in Tabelle 3 zusammengefassten Elastizitätsmoduln.

Die Ergebnisse zeigen, dass der erfindungsgemäße Parkettklebstoff im Vergleich zu SMP-930 einen um 367 % höheren Elastizitätsmodul und im Vergleich zu SMP-920 sogar einen um 462 % höheren Elastizitätsmodul besitzt. Der erfindungsgemäß beanspruchte Elastizitätsmodul von mindestens 7,5 N/mm² wird nicht nur erreicht, sondern deutlich überschritten.

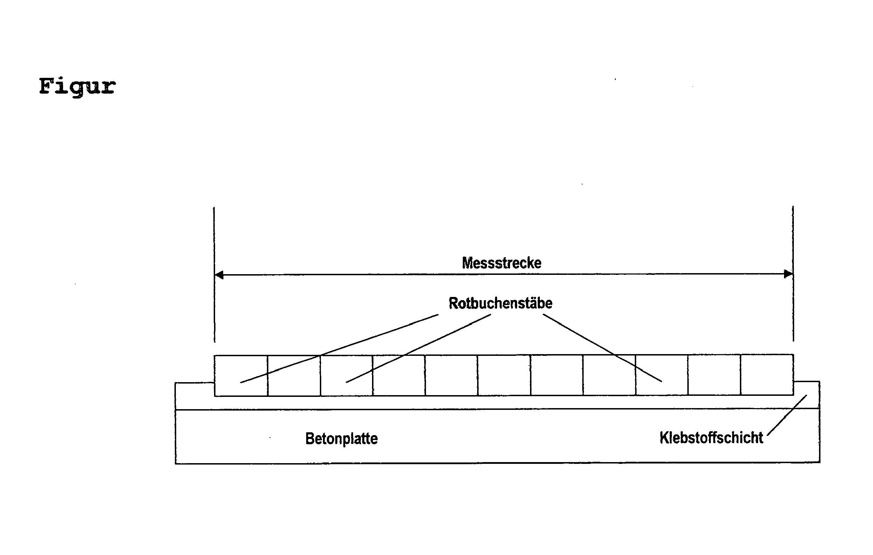

Mit dem in Tabelle 1 beschriebenen erfindungsgemäßen Parkettklebstoff wurde die Maßhaltigkeit des verklebten Parketts bestimmt (Versuchsaufbau gemäß der einzigen Figur) und mit der handelsüblicher silanmodifizierter Parkettklebstoffe (SMP-920 und SMP-930, Stauf Klebstoffwerk GmbH) mit Phthalatanteilen von 20 (SMP-920) und 11 Massenprozent (SMP-930) verglichen.

Dazu wurden 120cm x 50cm x 5cm große Betonplatten (Festigkeitsklasse C 20/25 gemäß DIN EN 206-1:2001-07) bis zur Gewichtskonstanz bei Normalklima, 23°C und 50% relative Luftfeuchtigkeit bis zur Gewichtskonstanz gelagert. Auf die Betonplatten wurde der zu prüfende Klebstoff gleichmäßig in definierter Schichtdicke von 0,85 mm aufgetragen. Unmittelbar nach dem Klebstoffauftrag wurden mittig zwanzig rechtwinklig geschnittene und gehobelte unter Normalklima vorgelagerte Rotbuchenstäbe der Abmessungen 25cm x 5cm x 1cm Längsseite an Längsseite fugenlos eingelegt und leicht angedrückt. Es wurden nur Rotbuchenstäbe mit Halbrift-Einschnitt verwendet, d.h. die Orientierung der Jahresringe auf der 1cm x 5cm großen Kopfseite betrug 45°. Die Verklebung wurde dann für 28 Tage bei Normalklima (23°C/50% relative Luftfeuchtigkeit) in einer Klimakammer aushärten gelassen und gelagert. Nun wurde die Ausgangslänge der Messstrecke senkrecht zur Breite der nebeneinander liegenden Stäbe gemessen (Ausgangslänge L_{A}, bei 20 Stäben ca. 1 m). Anschließend wurde das Klima auf 10°C und 85% relative Luftfeuchtigkeit geändert. Unter diesen Klimabedingungen steigt die Holzfeuchte an, die Rotbuchenstäbe versuchen sich auszudehnen und infolge des Breitenwachstums der Stäbe verlängert sich die Messstrecke. Das Ausmaß dieser Horizontalausdehnung ist abhängig von den mechanischen Eigenschaften des Klebstoffes. Nach 20 Tagen wurde der Längenwert der Messstrecke (L_{B}) erneut abgelesen. Die Ergebnisse sind in Tabelle 4 zusammengefasst.

Aus den Ergebnissen ist ersichtlich, dass der erfindungsgemäße Parkettklebstoff im Unterschied zu den handelsüblichen silanmodifizierten Parkettklebstoffen SMP-920 und SMP-930 eine deutlich geringere Holzausdehnung zulässt. Im Vergleich zu SMP-930 ist die horizontale Holzausdehnung um 55,6% und im Vergleich zu dem etwas elastischeren SMP-920 um 60,1 % reduziert. Dies bestätigt unmittelbar die erfindungsgemäß beanspruchte hohe Maßhaltigkeit des mit dem erfindungsgemäßen Parkettklebstoff verklebten Belagholzes.

Die offene Zeit des erfindungsgemäßen Klebstoffes (Zusammensetzung gemäß Tabelle 1) wurde gemäß DIN EN 14293:2006-10 ermittelt. Sie betrug 60 Minuten, d.h. innerhalb dieses Zeitraumes nach dem Klebstoffauftrag können noch Holzbodenbeläge in die Klebstoffschicht gedrückt und mit dem Untergrund verklebt werden. Auch die Herausnahme schon gelegter Beläge und deren Neuausrichtung ist innerhalb dieses Zeitraumes ohne weiteres durchführbar.

Mit dem in Tabelle 1 beschriebenen erfindungsgemäßen Parkettklebstoff wurde die Viskosität gemäß DIN EN ISO 2555:2000-01 (20 U/min) bestimmt. Bei 20 Umdrehungen pro Minute wurde eine Viskosität von 109.700 ± 6.800 mPa·s (n=5) gemessen. Die Viskosität liegt damit im Bereich von 80.000 bis 140.000 mPa·s, was leichte Verstreichbarkeit und formstabile Klebstoffraupen bis zu einer Höhe von mehr als 10 mm garantiert. In Kombination mit der Einkomponentigkeit und der offenen Zeit bedeutet dies eine einfache Handhabung und Verarbeitung des erfindungsgemäßen Parkettklebstoffes.

**Tabelle 1: Beispielhafte, besonders bevorzugte Zusammensetzung des erfindungsgemäßen Parkettklebstoffes (Anteile in Massenprozent).**

| **Rohstoff** | **Chemie** | **Funktion** | **Hersteller** | **Anteile [%]** |
|---|---|---|---|---|
| Geniosil STP-E 15 | Trimethoxysilan-terminiertes Polyurethan-Oligomer, MW: ca. 10.000 g/mol | Bindemittel, Basispolymer | Wacker Chemie | 21,5 |
| Omyalite 95 T | Kreidepulver, mit Stearinsäure oberflächenhydrophobiert, mittlerer Partikeldurchmesser: 1,0 µm | Mineralische Komponente | Omya | 49,1 |
| Omyabond 302 | Kreidepulver, mit Stearinsäure oberflächenhydrophobiert, mittlerer Partikeldurchmesser: 0,4 µm | Mineralische Komponente | Omya | 4 |
| Tremin 939 100 AST | Wollastonit, oberflächensilanisiert, mittlere Nadellänge 39 µm, mittleres Aspektverhältnis 7:1 | Mineralische Komponente | Quarzwerke | 7 |
| Geniosil XL 10 | Vinyltrimethoxysilan | Trockenmittel | Wacker Chemie | 0,8 |
| Geniosil GF 96 | 3-Aminopropyltrimethoxysilan | Haftvermittler | Wacker Chemie | 1,9 |
| Metatin K 740 | Dibutylzinndiacetylacetonat | Katalysator | Acima | 0,025 |
| Tinuvin 765 | Mischung aus Bis(1,2,2,6,6-pentamethyl-4-piperidyl)sebacat und Methyl-1,2,2,6,6-pentamethyl-4-piperidylsebacat | UV-Licht-Absorber | Ciba | 0,05 |
| Irganox 1135 | 3,5-Bis(1,1-dimethylethyl)-4-hydroxy-benzylpropansäure-C7-C9-isoalkylester | Antioxidationsmittel | Ciba | 0,15 |
| Hexamoll DINCH | 1,2-Cyclohexandicarbonsäurediisononylester | Weichmacher | BASF | 5 |
| Desmophen 1110 BD | Polypropylenoxid, MW: ca. 1.000 g/mol | Flüssig-Extender | Bayer Material Science | 5,8 |
| SAT 010 | Dimethoxymethylsilan-terminiertes Polypropylenoxid-Oligomer, MW: ca. 1.000 g/mol | Bindemittel, Reaktivverdünner | Kaneka | 4 |
| Disparlon 6100 | Polyamidwachs | Rheologisches Additiv | Kusumoto | 0,675 |

**Tabelle 2: Ergebnisse der Zugscherfestigkeitsprüfung gemäß DIN EN 14293:2006-10 (Lagerungsart A) an erfindungsgemäßem Parkettklebstoff, SMP-930 und SMP-920. Messwerte ± Standardabweichung (SD) sowie Anzahl der jeweiligen Messungen (n).**

| **Klebstoff** | **Zugscherfestigkeit ± SD** |
|---|---|
| Erfindungsgemäßer Klebstoff (Zusammensetzung gem. Tabelle 1) | 4,31 ± 0,27 N/mm² (n=8) |
| SMP-930 | 1,92 ± 0,17 N/mm² (n=7) |
| SMP-920 | 1,75 ± 0,20 N/mm² (n=6) |

**Tabelle 3: Ergebnisse der Elastizitätsmodulprüfung gemäß DIN EN ISO 527-1:1996-04 und DIN EN ISO 527-3:2003-07 an erfindungsgemäßem Parkettklebstoff, SMP-930 und SMP-920. Messwerte ± Standardabweichung (SD) sowie Anzahl der jeweiligen Messungen (n).**

| **Klebstoff** | **Elastizitätsmodul ± SD** |
|---|---|
| Erfindungsgemäßer Klebstoff (Zusammensetzung gem. Tabelle 1) | 8,54 ± 0,46 N/mm² (n=8) |
| SMP-930 | 1,83 ± 0,26 N/mm² (n=7) |
| SMP-920 | 1,52 ± 0,18 N/mm² (n=7) |

**Tabelle 4: Ergebnisse der Maßhaltigkeitsmessung von erfindungsgemäßem Parkettklebstoff (Zusammensetzung gemäß Tabelle 1), SMP-920 und SMP-930 (Stauf Klebstoffwerk GmbH).**

| **Klebstoff** | **Nr. der Messung** | **L_{A}** [mm] | **L_{B}** [mm] | **Änderung L_{A} - L_{B}** [%] |
|---|---|---|---|---|
| Erfindungsgemäß gemäß Tabelle 1 | 1 | 1018,2 | 1021,7 | 0,3437 |
| " | 2 | 1017,6 | 1020,4 | 0,2752 |
| " | 3 | 1020,3 | 1023,6 | 0,3234 |
| " | 4 | 1019,7 | 1022,5 | 0,2746 |
| " | 5 | 1016,1 | 1019,3 | 0,3149 |
| " | 6 | 1018,8 | 1021,1 | 0,2258 |
| " | 7 | 1016,6 | 1019,8 | 0,3148 |
| " | 8 | 1017,4 | 1019,7 | 0,2261 |
| | **Mittelwert** | **1018,1** | **1021,0** | **0,2873** |
| | Standardabweichung | 1,46 | 1,51 | 0,0445 |
| | | | | |
| SMP-930 | 1 | 1017,1 | 1024,7 | 0,7472 |
| " | 2 | 1019,8 | 1026,4 | 0,6472 |
| " | 3 | 1020,3 | 1025,9 | 0,5489 |
| " | 4 | 1016,3 | 1022,5 | 0,6101 |
| " | 5 | 1017,6 | 1026,7 | 0,8943 |
| " | 6 | 1018,5 | 1024,5 | 0,5891 |
| " | 7 | 1020,3 | 1025,3 | 0,4901 |
| | **Mittelwert** | **1018,6** | **1025,1** | **0,6467** |
| | Standardabweichunq | 1,62 | 1,43 | 0,1355 |
| | | | | |
| SMP-920 | 1 | 1020,8 | 1027,9 | 0,6955 |
| " | 2 | 1020,1 | 1028,4 | 0,8136 |
| " | 3 | 1018,1 | 1025,9 | 0,7661 |
| " | 4 | 1017,9 | 1025,5 | 0,7466 |
| " | 5 | 1020,1 | 1026,7 | 0,6470 |
| " | 6 | 1017,4 | 1025,5 | 0,7961 |
| " | 7 | 1019,4 | 1025,3 | 0,5788 |
| | **Mittelwert** | **1019,1** | **1026,5** | **0,7206** |
| | Standardabweichung | 1,31 | 1,25 | 0,0849 |

**Tabelle 5: Zusammensetzung des handelsüblichen Parkettklebstoffes SMP-920 (Stauf Klebstoffwerk GmbH; Anteile in Massenprozent).**

| **Rohstoff** | **Chemie** | **Funktion** | **Hersteller** | **Anteil [%]** |
|---|---|---|---|---|
| S 203 H | Dimethoxymethylsilan-terminiertes Polypropylenoxid-Oligomer; MW: ca. 12.000 g/mol | Bindemittel, Basispolymer | Kaneka | 11 |
| S 303 H | Dimethoxymethylsilan-terminiertes Polypropylenoxid-Oligomer; MW: ca. 18.000 g/mol | Bindemittel, Basispolymer | Kaneka | 6 |
| Silquest A-171 | Vinyltrimethoxysilan | Trockenmittel | Momentive | 0,7 |
| Silquest A-1637 | 4-Amino-3,3-dimethylbutyltrimethoxysilan | Haftvermittler | Momentive | 0,7 |
| TIB KAT 223 | Dioctylzinn-bis(2,4-pentandionat) | Katalysator | TIB Chemicals | 0,34 |
| Irganox 1726 | 4,6-Bis(dodecylthiomethyl)-o-cresol | Antioxidationsmittel | Ciba | 0,1 |
| DINP | Diisononylphthalat | Weichmacher | BASF | 20 |
| Crayvallac SLX | Polyamidwachs | Rheologisches Additiv | Cray Valley | 0,4 |
| Omya BLP 3 | Kalksteinpulver, mit Stearinsäure oberflächenhydrophobiert, mittlerer Partikeldurchmesser: 5,7 µm | Mineralische Komponente | Omya | 19,5 |
| Calcilit 6 HS | Kalksteinpulver, mit Stearinsäure oberflächenhydrophobiert, mittlerer Partikeldurchmesser: 7 µm | Mineralische Komponente | Alpha-Calcit | 8,66 |
| MS 70 F | Kalksteinpulver, mittlerer Partikeldurchmesser: 4,5 µm | Mineralische Komponente | Schön und Hippelein | 15 |
| Calcifin 20 H | Kalksteinpulver, mit Stearinsäure oberflächenhydrophobiert, mittlerer Partikeldurchmesser: 4,4 µm | Mineralische Komponente | Alpha-Calcit | 16 |
| HDK H 18 | Hochdisperse Kieselsäure, oberflächensilanisiert | Mineralische Komponente | Wacker | 1,6 |

**Tabelle 6: Zusammensetzung des handelsüblichen Parkettklebstoffes SMP-930 (Stauf Klebstoffwerk GmbH; Anteile in Massenprozent).**

| **Rohstoff** | **Chemie** | **Funktion** | **Hersteller** | **Anteil** [%] |
|---|---|---|---|---|
| S 203 H | Dimethoxymethylsilan-terminiertes Polypropylenoxid-Oligomer; MW: ca. 12.000 g/mol | Bindemittel, Basispolymer | Kaneka | 3 |
| S 303 H | Dimethoxymethylsilan-terminiertes Polypropylenoxid-Oligomer; MW: ca. 18.000g/mol | Bindemittel, Basispolymer | Kaneka | 16 |
| Dynasylan VTMO | Vinyltrimethoxysilan | Trockenmittel | Degussa | 0,8 |
| KBM 603 | N-2-(aminoethyl)-3-aminopropyltrimethoxysilan | Haftvermittler | Shin-Etsu | 0,8 |
| Neostann U 220 H | Dibutylzinndiacetylacetonat | Katalysator | Nitto Kasei | 0,32 |
| Irganox 1726 | 4,6-Bis(dodecylthiomethyl)-o-cresol | Antioxidationsmittel | Ciba | 0,1 |
| Palatinol 10-P | Bis(2-propylheptylphthalat) | Weichmacher | BASF | 11 |
| Mesamoll | Phenolalkylsulfonsäureester | Weichmacher | Bayer | 4 |
| Thixatrol MAX | Polyamidwachs | Rheologisches Additiv | elementis | 0,5 |
| Omyacarb 10 BG | Kalksteinpulver, mittlerer Partikeldurchmesser: 7 µm | Mineralische Komponente | Omya | 19,5 |
| Calcifin 20 H | Kalksteinpulver, mit Stearinsäure oberflächenhydrophobiert, mittlerer Partikeldurchmesser: 4,4 µm | Mineralische Komponente | Alpha-Calcit | 41,58 |
| Socal 312 | Gefälltes Calciumcarbonat, gecoated, mittlerer Partikeldurchmesser: 0,07 µm | Mineralische Komponente | Solvay | 2,4 |

## Patentansprüche

1. Wasser-, Lösemittel- und Phthalat-freier Einkomponenten-Parkettklebstoff auf Basis silanterminierter Polyalkylenoxid-Oligomerer,
**dadurch gekennzeichnet, dass** er folgende Stoffe enthält oder aus ihnen besteht:
a) 10 bis 30 Massenprozent eines feuchtigkeitsreaktiven silanterminierten Polyalkylenoxid-Bindemittels mit einem mittleren Molekulargewicht von 6.000 bis 20.000 g/mol, wobei die Silanfunktionen über Urethan- und/oder Harnstoffgruppen mit dem oligomeren Grundgerüst verbunden sind,
b) 30 bis 60 Massenprozent eines oberflächenhydrophobierten Kreidepulvers mit einem mittleren Partikeldurchmesser von 0,8 bis 4,0 µm,
c) 2 bis 10 Massenprozent eines oberflächenhydrophobierten Kreidepulvers mit einem mittleren Partikeldurchmesser von 0,2 bis 0,7 µm,
d) 3 bis 15 Massenprozent eines oberflächenhydrophobierten Wollastonits mit einer mittleren Nadellänge von 15 bis 60 µm und einem mittleren Aspektverhältnis von 3:1 bis 12:1,
e) 0,2 bis 3 Massenprozent eines feuchtigkeitsreaktiven silanmodifizierten Trockenmittels, sowie
f) 0,3 bis 4 Massenprozent eines feuchtigkeitsreaktiven silanmodifizierten Haftvermittlers,
wobei sich die Prozentangaben auf die Masse des verarbeitungsfertigen Parkettklebstoffes beziehen und die Summe der Bestandteile a) bis f) 45,5 % bis 100 % beträgt.

2. Wasser-, Lösemittel- und Phthalat-freier Einkomponenten-Parkettklebstoff nach Anspruch 1, **dadurch gekennzeichnet, dass** er folgende Stoffe enthält oder aus ihnen besteht:
a) 16 bis 26 Massenprozent eines feuchtigkeitsreaktiven silanterminierten Polyalkylenoxid-Bindemittels mit einem mittleren Molekulargewicht von 7.000 bis 13.000 g/mol, wobei die terminalen Silanfunktionen über Urethan- und/oder Harnstoffgruppen mit dem oligomeren Grundgerüst verbunden sind,
b) 44 bis 54 Massenprozent eines oberflächenhydrophobierten Kreidepulvers mit einem mittleren Partikeldurchmesser von 0,8 bis 1,8 µm,
c) 3 bis 6 Massenprozent eines oberflächenhydrophobierten Kreidepulvers mit einem mittleren Partikeldurchmesser von 0,3 bis 0,6 µm,
d) 5 bis 10 Massenprozent eines oberflächenhydrophobierten Wollastonits mit einer mittleren Nadellänge von 25 bis 45 µm und einem mittleren Aspektverhältnis von 5:1 bis 10:1,
e) 0,5 bis 1,5 Massenprozent eines feuchtigkeitsreaktiven silanmodifizierten Trockenmittels, sowie
f) 1 bis 3 Massenprozent eines feuchtigkeitsreaktiven silanmodifizierten Haftvermittlers,
wobei sich die Prozentangaben auf die Masse des verarbeitungsfertigen Parkettklebstoffes beziehen und die Summe der Bestandteile a) bis f) 69,5 % bis 100 % beträgt.

3. Wasser-, Lösemittel- und Phthalat-freier Einkomponenten-Parkettklebstoff nach einem der vorhergehenden Ansprüche, **dadurch gekennzeichnet, dass** das Massenverhältnis von Bestandteil b) zu Bestandteil c) 9:1 bis 15:1 und das Massenverhältnis von Bestandteil c) zu Bestandteil d) 1:1,5 bis 1:2 beträgt.

4. Wasser-, Lösemittel- und Phthalat-freier Einkomponenten-Parkettklebstoff nach einem der vorhergehenden Ansprüche, **dadurch gekennzeichnet, dass** die terminalen Silangruppen des silanterminierten Polyalkylenoxid-Bindemittels gemäß a) Trimethoxysilangruppen sind, das polymere Grundgerüst Polypropylenoxid ist und das mittlere Molekulargewicht 10.000 g/mol beträgt.

5. Wasser-, Lösemittel- und Phthalat-freier Einkomponenten-Parkettklebstoff nach einem der vorhergehenden Ansprüche, **dadurch gekennzeichnet, dass** das Kreidepulver gemäß b) einen mittleren Partikeldurchmesser von 1,0 µm und das Kreidepulver gemäß c) einen mittleren Partikeldurchmesser von 0,4 µm besitzt.

6. Wasser-, Lösemittel- und Phthalat-freier Einkomponenten-Parkettklebstoff nach einem der vorhergehenden Ansprüche, **dadurch gekennzeichnet, dass** das Wollastonit gemäß d) eine mittlere Nadellänge von 39 µm und ein mittleres Aspektverhältnis von 7:1 aufweist.

7. Wasser-, Lösemittel- und Phthalat-freier Einkomponenten-Parkettklebstoff nach einem der vorhergehenden Ansprüche, **dadurch gekennzeichnet, dass** die Viskosität des verarbeitungsfertigen Klebstoffes, gemessen nach DIN EN ISO 2555:2000-01 (20 U/min), 109.700 ± 6.800 mPa·s beträgt.

8. Wasser-, Lösemittel- und Phthalat-freier Einkomponenten-Parkettklebstoff nach einem der vorhergehenden Ansprüche, **dadurch gekennzeichnet, dass** die Zugscherfestigkeit, gemessen nach DIN EN 14293:2006-10 (Lagerungsart A), 4,31 ± 0,27 N/mm² beträgt und der Elastizitätsmodul, gemessen nach DIN EN ISO 527-1:1996-04 und DIN EN ISO 527-3:2003-07, 8,54 ± 0,46 N/mm² beträgt.

9. Verwendung des Wasser-, Lösemittel- und Phthalat-freien Einkomponenten-Parkettklebstoffes auf Basis silanterminierter Polyalkylenoxid-Oligomerer nach einem der vorhergehenden Ansprüche zum Verkleben von Parkett, Holzbodenbelägen und/oder Holzwerkstoffplatten mit einem Untergrund.

10. Verwendung des Wasser-, Lösemittel- und Phthalat-freien Einkomponenten-Parkettklebstoffes nach vorhergehendem Anspruch, **dadurch gekennzeichnet, dass** der Untergrund trocken oder feucht ist und aus Beton, Zement, Zementestrich, Zementfließestrich, Zementmörtel, zementgebundener Holzfaser, Keramik, Naturstein, Calciumsulfatestrich, Calciumsulfatfließestrich, Magnesitestrich, Holz, Holzwerkstoff, Sperrholz, Kork, Gips, Gipsfaser, Gipskarton, Hartfaser, mineralischer Spachtelmasse, textilem faserartigem Material oder einer Kombination dieser Untergründe besteht und das verklebte Parkett, die Holzbodenbeläge und/oder die Holzwerkstoffplatten ganz oder teilweise aus europäischen Laub- und/oder Nadelholzarten, nicht-europäischen Holzarten oder einer Kombination dieser Holzarten bestehen.

## Claims

1. Water-, solvent- and phthalate-free one-component parquet adhesive based on silane-terminated polyalkylene oxide oligomers,
**characterised in that** it contains or consists of the following materials:
a) 10 to 30% by weight of a moisture-reactive silane-terminated polyalkylene oxide binding agent having an average molecular weight of 6,000 to 20,000g/mol, wherein the silane functions are connected to the oligomeric backbone by urethane and/or urea groups,
b) 30 to 60% by weight of a surface hydrophobised chalk powder having an average particle diameter of 0.8 to 4.0µm,
c) 2 to 10% by weight of a surface hydrophobised chalk powder having an average particle diameter of 0.2 to 0.7µm,
d) 3 to 15% by weight of a surface hydrophobised wollastonite having an average needle length of 15 to 60µm and an average aspect ratio of 3:1 to 12:1,
e) 0.2 to 3% by weight of a moisture-reactive silane-modified drying agent, and
f) 0.3 to 4% by weight of a moisture-reactive silane-modified bonding agent,
wherein the percentage values refer to the weight of the ready-for-use parquet adhesive and the total of components a) to f) is 45.5% to 100%.

2. Water-, solvent- and phthalate-free one-component parquet adhesive according to claim 1, **characterised in that** it contains or consists of the following materials:
a) 16 to 26% by weight of a moisture-reactive silane-terminated polyalkylene oxide binding agent having an average molecular weight of 7,000 to 13,000g/mol, wherein the terminal silane functions are connected to the oligomeric backbone by urethane and/or urea groups,
b) 44 to 54% by weight of a surface hydrophobised chalk powder having an average particle diameter of 0.8 to 1.8µm,
c) 3 to 6% by weight of a surface hydrophobised chalk powder having an average particle diameter of 0.3 to 0.6µm,
d) 5 to 10% by weight of a surface hydrophobised wollastonite having an average needle length of 25 to 45µm and an average aspect ratio of 5:1 to 10:1,
e) 0.5 to 1.5% by weight of a moisture-reactive silane-modified drying agent, and
f) 1 to 3% by weight of a moisture-reactive silane-modified bonding agent,
wherein the percentage values refer to the weight of the ready-for-use parquet adhesive and the total of components a) to f) is 69.5% to 100%.

3. Water-, solvent- and phthalate-free one-component parquet adhesive according to one of the preceding claims, **characterised in that** the mass ratio of component b) to component c) is 9:1 to 15:1 and the mass ratio of component c) to component d) is 1:1.5 to 1:2.

4. Water-, solvent- and phthalate-free one-component parquet adhesive according to one of the preceding claims, **characterised in that** the terminal silane groups of the silane-terminated polyalkylene oxide binding agent according to a) are trimethoxysilane groups, the polymeric backbone is polypropylene oxide and the average molecular weight is 10,000g/mol.

5. Water-, solvent- and phthalate-free one-component parquet adhesive according to one of the preceding claims, **characterised in that** the chalk powder according to b) has an average particle diameter of 1.0µm and the chalk powder according to c) has an average particle diameter of 0.4µm.

6. Water-, solvent- and phthalate-free one-component parquet adhesive according to one of the preceding claims, **characterised in that** the wollastonite according to d) has an average needle length of 39µm and an average aspect ratio of 7:1.

7. Water-, solvent- and phthalate-free one-component parquet adhesive according to one of the preceding claims, **characterised in that** the viscosity of the ready-to-use adhesive, measured according to DIN EN ISO 2555:2000-01 (20 rpm), amounts to 109,700 ± 6,800 mPa·s.

8. Water-, solvent- and phthalate-free one-component parquet adhesive according to one of the preceding claims, **characterised in that** the tensile shear strength, measured according to DIN EN 14293:2006-10 (storage type A), amounts to 4.31 ± 0.27 N/mm² and the modulus of elasticity, measured according to DIN EN ISO 527-1:1996-04 and DIN EN ISO 527-3:2003-07 amounts to 8.54 ± 0.46 N/mm².

9. Use of the water-, solvent- and phthalate-free one-component parquet adhesive based on silane-terminated polyalkylene oxide oligomers according to one of the preceding claims for the adhesion of parquet, wooden flooring and/or wood-based boards with a subsurface.

10. Use of the water-, solvent- and phthalate-free one-component parquet adhesive according to the preceding claim, **characterised in that** the subsurface is dry or wet and consists of concrete, cement, cement screed, liquid cement screed, cement mortar, cement-bound wood fibre, ceramics, natural stone, calcium sulphate screed, liquid calcium sulphate screed, magnesite screed, wood, wood materials, plywood, cork, gypsum, gypsum fibre, gypsum board, hard fibre, mineral filler, textile fibrous material, or a combination of these subsurfaces and the glued parquet, the wooden flooring and/or the wood-based boards are made entirely or partially from European hardwood and/or softwood varieties, non-European wood varieties or a combination thereof.

## Revendications

1. Adhésif pour collage de parquets monocomposant sans eau, sans solvant et sans phtalate, à base d'un oligomère de poly(oxyde d'alkylène) à terminaison silane, **caractérisé en ce qu'**il contient les substances suivantes, ou en est constitué :
a) 10 à 30 pourcents en masse d'un liant à base de poly(oxyde d'alkylène) à terminaison silane, réagissant à l'humidité, ayant une masse moléculaire moyenne de 6000 à 20 000 g/mol, les fonctions silane étant liées au squelette de base oligomère par l'intermédiaire de groupes uréthanne et/ou urée,
b) 30 à 60 pourcents en masse d'une poudre de craie hydrophobisée en surface, ayant une granulométrie moyenne de 0,8 à 4,0 µm,
c) 2 à 10 pourcents en masse d'une poudre de craie hydrophobisée en surface, ayant une granulométrie moyenne de 0,2 à 0,7 µm,
d) 3 à 15 pourcents en masse d'une wollastonite hydrophobisée en surface, ayant une longueur moyenne des aiguilles de 15 à 60 µm et un rapport d'aspect moyen de 3:1 à 12:1,
e) 0,2 à 3 pourcents en masse d'un agent déshydratant modifié par un silane, réagissant à l'humidité, ainsi que
f) 0,3 à 4 pourcents en masse d'un promoteur d'adhérence modifié par un silane, réagissant à l'humidité,
les indications de pourcentage étant rapportées à la masse de l'adhésif pour collage de parquets prêt à la mise en oeuvre, et la somme des constituants a) à f) étant de 45,5 % à 100 %.

2. Adhésif pour collage de parquets monocomposant sans eau, sans solvant et sans phtalate selon la revendication 1, **caractérisé en ce qu'**il contient les substances suivantes, ou en est constitué :
a) 16 à 26 pourcents en masse d'un liant à base de poly(oxyde d'alkylène) à terminaison silane, réagissant à l'humidité, ayant une masse moléculaire moyenne de 7000 à 13 000 g/mol, les fonctions silane terminales étant liées au squelette de base oligomère par l'intermédiaire de groupes uréthanne et/ou urée,
b) 44 à 54 pourcents en masse d'une poudre de craie hydrophobisée en surface, ayant une granulométrie moyenne de 0,8 à 1,8 µm,
c) 3 à 6 pourcents en masse d'une poudre de craie hydrophobisée en surface, ayant une granulométrie moyenne de 0,3 à 0,6 µm,
d) 5 à 10 pourcents en masse d'une wollastonite hydrophobisée en surface, ayant une longueur moyenne des aiguilles de 25 à 45 µm et un rapport d'aspect moyen de 5:1 à 10:1,
e) 0,5 à 1,5 pourcents en masse d'un agent déshydratant modifié par un silane, réagissant à l'humidité, ainsi que
f) 1 à 3 pourcents en masse d'un promoteur d'adhérence modifié par un silane, réagissant à l'humidité,
les indications de pourcentage étant rapportées à la masse de l'adhésif pour collage de parquets prêt à la mise en oeuvre, et la somme des constituants a) à f) étant de 69,5 % à 100 %.

3. Adhésif pour collage de parquets monocomposant sans eau, sans solvant et sans phtalate selon l'une des revendications précédentes, **caractérisé en ce que** le rapport en masse du composant b) au composant c) est de 9:1 à 15:1, et le rapport en masse du constituant c) au constituant d) est de 1:1,5 à 1:2.

4. Adhésif pour collage de parquets monocomposant sans eau, sans solvant et sans phtalate selon l'une des revendications précédentes, **caractérisé en ce que** les groupes silane terminaux du liant à base de poly(oxyde d'alkylène) à terminaison silane selon a) sont des groupes triméthoxysilane, le squelette de base polymère est le poly(oxyde de propylène), et la masse moléculaire moyenne est de 10 000 g/mol.

5. Adhésif pour collage de parquets monocomposant sans eau, sans solvant et sans phtalate selon l'une des revendications précédentes, **caractérisé en ce que** la poudre de craie selon b) présente une granulométrie moyenne de 1,0 µm, et la poudre de craie selon c) présente une granulométrie moyenne de 0,4 µm.

6. Adhésif pour collage de parquets monocomposant sans eau, sans solvant et sans phtalate selon l'une des revendications précédentes, **caractérisé en ce que** la wollastonite selon d) présente une longueur moyenne des aiguilles de 39 µm et un rapport d'aspect moyen de 7:1.

7. Adhésif pour collage de parquets monocomposant sans eau, sans solvant et sans phtalate selon l'une des revendications précédentes, **caractérisé en ce que** la viscosité de l'adhésif prêt à la mise en oeuvre, mesurée selon DIN EN ISO 2555:2000-01 (20 tr/min), est de 109 700 ± 6800 mPa.s.

8. Adhésif pour collage de parquets monocomposant sans eau, sans solvant et sans phtalate selon l'une des revendications précédentes, **caractérisé en ce que** la résistance au cisaillement en traction, mesurée selon DIN EN 14293:2006-10 (type de stockage A), est de 4,31 ± 0,27 N/mm², et que le module d'élasticité, mesuré selon DIN EN ISO 527-1:1996-04 et DIN EN ISO 527-3:2003-07, est de 8,54 ± 0,46 N/mm².

9. Utilisation de l'adhésif pour collage de parquets monocomposant sans eau, sans solvant et sans phtalate à base d'oligomères de poly(oxyde d'alkylène) à terminaison silane selon l'une des revendications précédentes pour le collage sur un support de parquets, de revêtements de sol en bois et/ou de panneaux en un matériau à base de bois, avec un subjectile.

10. Utilisation de l'adhésif pour collage de parquets monocomposant sans eau, sans solvant et sans phtalate selon la revendication précédente, **caractérisée en ce que** le support est sec ou humide et est constitué de béton, de ciment, de chape-ciment, de chape fluide de ciment, de mortier de ciment, de fibres de bois liées à du ciment, de céramique, de pierre naturelle, de chape de sulfate de calcium, de chape fluide de sulfate de calcium, de chape de magnésite, de bois, de matériau à base de bois, de contreplaqué, de liège, de plâtre, de fibres de plâtre, de plaque de plâtre cartonnée, de fibre dure, d'une masse à spatuler minérale, d'un matériau fibreuse textile ou d'une combinaison de ces subjectiles, et que le parquet collé, les revêtements de sol en bois et/ou les panneaux en un matériau à base de bois sont en totalité ou en partie constitués d'espèces de bois de feuillu et/ou de conifère, d'espèces de bois non européennes et/ou d'une combinaison de ces espèces de bois.
